# FASCICULE DE BREVET EUROPEEN

(11) **EP 2 303 799 B1**
(45) Date de publication et mention de la délivrance du brevet: **23.03.2016**
(21) Numéro de dépôt: 09766079.9
(22) Date de dépôt: 16.06.2009
(51) Int. Cl.: C04B 35/484, C03B 5/43

(54) **PRODUIT REFRACTAIRE A FORTE TENEUR EN ZIRCONE**
ZIRCONIUMDIOXIDREICHES FEUERFESTMATERIAL
HIGH ZIRCONIA REFRACTORY MATERIAL

(30) Priorité: 16.06.2008 FR 0853967
(43) Date de publication de la demande: 06.04.2011
(73) Titulaire: Saint-Gobain Centre de Recherches et d'Etudes Européen, 92400 Courbevoie (FR)
(72) Inventeur: GAUBIL, Michel, F-30133 Les Angles (FR); MASSARD, Ludovic, F-84170 Monteux (FR)
(74) Mandataire: Sartorius, Jérome
(86) Numéro de dépôt international: PCT/FR2009/051141
(87) Numéro de publication internationale: WO 2009/153517

(56) Documents cités:
- EP-A- 0 431 445
- WO-A-03/074445
- WO-A-2005/068393
- JP-A- 8 277 162
- JP-A- H1 059 768

## Description

### Domaine technique

L'invention concerne un nouveau produit réfractaire fondu et coulé à forte teneur en zircone.

### Etat de la technique

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas a *priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. La matière en fusion est ensuite coulée dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone, c'est-à-dire comportant plus de 85 % en poids de zircone (ZrO₂), sont réputés pour leur qualité de très grande résistance à la corrosion sans coloration du verre produit et sans génération de défauts.

Classiquement, les produits fondus et coulés à forte teneur en zircone comportent également de l'oxyde de sodium (Na₂O) pour éviter la formation de zircon à partir de la zircone et de la silice présentes dans le produit. La formation de zircon est en effet néfaste puisqu'elle s'accompagne d'une diminution de volume de l'ordre de 20 %, créant ainsi des contraintes mécaniques à l'origine de fissures.

Le produit ER-1195 produit et commercialisé par la Société Européenne des Produits Réfractaires et couvert par le brevet EP-B-403 387 est aujourd'hui largement utilisé dans les fours de fusion du verre. Sa composition chimique comprend environ 94 % de zircone, 4 à 5 % de silice, environ 1 % d'alumine, 0,3 % d'oxyde de sodium et moins de 0,05 % en poids de P₂O₅. Elle est typique des produits à forte teneur en zircone utilisés pour les fours verriers.

FR 2 701 022 décrit des produits fondus et coulés à forte teneur en zircone qui contiennent 7,0 à 11,2 % en poids de SiO₂, 0,05 à 1,0 % en poids de P₂O₅, 0,05 à 1,0 % en poids d'oxyde de bore B₂O₃ et 0,01 à 0,12 % en poids de Na₂O + K₂O.

FR 2 723 583 décrit des produits fondus et coulés à forte teneur en zircone qui contiennent 3 à 8 % en poids de SiO₂, 0,1 à 2,0 % en poids d'Al₂O₃, 0,05 à 3,0 % en poids d'oxyde de bore B₂O₃, 0,05 à 3 % en poids de BaO + SrO + MgO, et 0,05 à 0,6 % en poids de Na₂O + K₂O et moins de 0,3 % en poids de Fe₂O₃ + TiO₂.

JP H08-277162 décrit un produit réfractaire électrofondu à base de zircone et présentant une contrainte résiduelle inférieure ou égale à 80 MPa et une résistance à la compression inférieure ou égale à 50 MPa.

EP-A-0431445 décrit un produit réfractaire coulé à base de zircone et ne contenant substantiellement pas de P₂O₅, B₂O₃ et CuO.

WO2005/068393 décrit un produit réfractaire coulé à base de zircone ayant une bonne résistivité électrique, en particulier pour être utilisé dans un four verrier.

WO03/074445 décrit un produit réfractaire fondu et coulé à base de zircone et comportant entre 0,3% et 2% d'oxyde d'yttrium.

JP 10-059768 décrit un produit réfractaire fondu à base de zircone et ne contenant pratiquement pas de P₂O₅, ni d'oxydes alcalino-terreux.

Le fluage d'un matériau sous l'action d'une contrainte (compression, traction ou flexion) peut se définir comme la capacité du matériau à se déformer visco-plastiquement, c'est-à-dire de manière permanente, sous l'effet de cette charge.

L'actuel développement de verres de très haute qualité augmente les exigences pour les produits réfractaires des fours de fusion du verre. En particulier, il existe un besoin pour des produits réfractaires présentant des propriétés de fluage et/ou une résistance aux variations thermiques améliorées, ou, de manière générale, présentant un meilleur compromis entre ces deux propriétés.

La présente invention vise à satisfaire ce besoin.

### Résumé de l'invention

Suivant un premier mode de réalisation principal, l'invention propose un produit réfractaire fondu et coulé selon la revendication 1.

Comme on le verra plus loin, de manière surprenante, le produit réfractaire selon l'invention présente d'excellentes propriétés de fluage, tout en conservant une bonne résistance aux variations thermiques.

Avantageusement, de telles propriétés de fluage permettent, en particulier pour les blocs constituant les parois des cuves de fusion des fours de fusion du verre, d'accommoder les dimensions et de ne pas créer de fissures lors de la mise en service des fours de fusion du verre (montée en température sous contrainte).

Avantageusement, une bonne résistance aux variations thermiques permet de constituer des fours de fusion du verre dimensionnellement stables au cours du temps malgré les variations thermiques générées par les arrêts du four,

Un produit réfractaire selon ce premier mode de réalisation principal peut encore comporter une ou plusieurs des caractéristiques optionnelles suivantes, y compris lorsqu'il est conforme aux modes de réalisation particuliers décrits ci-après et que ces caractéristiques optionnelles ne sont pas incompatibles avec lesdits modes de réalisation particuliers.
- Le pourcentage massique ZrO₂ + HfO₂ est inférieur à 95,65 %, voire inférieur à 95,4 %, voire inférieur à 95,3 %, voire inférieur à 95,2 %, voire inférieur à 95,0% ou inférieur à 94,5 % et/ou supérieur à 90,4 %, ou supérieur à 91,0 %, ou supérieur à 92,0 %, ou supérieur à 93,0 %, voire supérieur à 94,0 %.
- Le pourcentage massique d'alumine Al₂O₃ est inférieur ou égal à 1,4 %, voire inférieur ou égal à 1,3 %.
- Le pourcentage massique Al₂O₃ est supérieur ou égal à 0,8 %, voire supérieur ou égal à 1,0 % ou supérieur ou égal à 1,1 %.
- Le rapport (B/N) des pourcentages massiques B₂O₃ / (Na₂O+K₂O) est supérieur à 0,35, supérieur à 0,4, supérieur à 0,5, supérieur à 0,6, supérieur à 0,8, supérieur à 0,9, supérieur à 1,0, et/ou inférieur ou égal à 2,2, inférieur à 2,0, inférieur à 1,7, ou inférieur à 1,5.
- Le rapport (A/N) des pourcentages massiques Al₂O₃ / (Na₂O+K₂O) est supérieur à 4, de préférence supérieur à 5, voire supérieur à 6, et/ou inférieur à 10, inférieur à 8, voire inférieur à 7,5.
- (Na₂O+K₂O) ≥ 0,15 % et/ou (Na₂O+K₂O) ≤ 0,40 %, voire (Na₂O+K₂O) ≤ 0,30 %,
- B₂O₃ ≥ 0,10 %, voire B₂O₃ ≥ 0,12 %, voire B₂O₃ ≥ 0,15 % et/ou B₂O₃ ≤ 0,30 %.
- L'oxyde de potassiumK₂O n'est présent qu'à titre d'impuretés et son pourcentage massique est inférieur à 0,2 %, voire inférieur à 0,1 %.
- Le pourcentage massique total des « autres espèces » est inférieur à 1,0 %, inférieur à 0,6 %, inférieur à 0,5 %, voire inférieur à 0,3 %.
- Les oxydes de fer et/ou de titane et/ou de calcium et/ou de strontium et/ou de magnésium et/ou de zinc et/ou de phosphore ne sont présents qu'à titre d'impuretés.
- Le pourcentage massique total en oxydes de calcium et/ou de strontium et/ou de magnésium et/ou dé zinc, CaO + SrO + MgO + ZnO, est inférieur à 0,3 %, de préférence à 0,2 %.
- Le pourcentage massique en oxydes de fer et/ou de titane, Fe₂O₃ + TiO₂, est inférieur à 0,4 %, de préférence inférieur à 0,3 %, de préférence inférieur à 0,2 %.
- Les « autres espèces » ne sont constituées que par des impuretés.
- Le pourcentage massique d'une "autre espèce" quelconque est toujours inférieur à 0,4 %, voire inférieur à 0,3 %, voire inférieur à 0,2 %.

Suivant un premier mode de réalisation particulier du premier mode de réalisation principal, l'invention propose un produit réfractaire fondu et coulé comportant, en pourcentages massiques sur la base des oxydes et pour un total de 100%:
- ZrO₂ + HfO₂ : complément à 100 %
- SiO₂: 3,5 % à 6,0 %
- Al₂O₃ : 0,7 % à 1,5 %
- Na₂O+K₂O 0,10 % à 0,40 %
- B₂O₃ : 0,05 % à ,40 %
- CaO + SrO + MgO + ZnO : < 0,4 %
- P₂O₅ : < 0,05 %
- Fe₂O₃ + TiO₂ : < 0,55 %
- autres espèces : < 1,5 %
le rapport (B/N) des pourcentages massiques B₂O₃ / (Na₂O+K₂O) étant supérieur à 0,3, de préférence supérieur à 0,35, de préférence supérieur à 0,4, de préférence supérieur à 0,5, voire supérieur à 0,8, voire supérieur à 1,0 et inférieur à 2,5, inférieur à 2,2, inférieur à 2,0, voire inférieur à 1,5, et
le rapport (A/N) des pourcentages massiques Al₂O₃ / (Na₂O+K₂O) étant supérieur à 3,5, de préférence supérieur à 4, voire supérieur à 5, voire supérieur à 6, et inférieur à 15, inférieur à 12, inférieur à 10, inférieur à 8, voire inférieur à 7,5.

En particulier, Na₂O+K₂O ≥ 0,15 % et/ou Na₂O+K₂O ≤ 0,30 %.

Suivant un deuxième mode de réalisation particulier, l'invention propose un produit réfractaire fondu et coulé comportant, en pourcentages massiques sur la base des oxydes et pour un total de 100 % :
- ZrO₂ + HfO₂: complément à 100 %
- SiO₂: 3,5 % à 6,0 %
- Al₂O₃: 0,7 % à 1,5 %
- Na₂O + K₂O : 0,10 % à 0,43 %
- B₂O₃ : 0,05 % à 0,40 %
- CaO + SrO + MgO + ZnO : < 0,4 %
- P₂O₅ : < 0,05 %
- Fe₂O₃ + TiO₂: < 0,55 %
- autres espèces : : < 1,5 %,
le rapport (B/N) des pourcentages massiques B₂O₃ / (Na₂O+K₂O) étant supérieur à 0,3, de préférence supérieur à 0,35, de préférence supérieur à 0,4, de préférence supérieur à 0,5, voire supérieur à 0,8, voire supérieur à 1,0 et inférieur à 2,5, inférieur à 2,2, inférieur à 2,0, voire inférieur à 1,5, et
le rapport (A/N) des pourcentages massiques Al₂O₃ / (Na₂O+K₂O) étant supérieur à 3,5, de préférence supérieur à 4, voire supérieur à 5, voire supérieur à 6, et inférieur à 15, inférieur à 12, inférieur à 10, inférieur à 8, voire inférieur à 7,5.

De préférence, le pourcentage massique B₂O₃ est supérieur ou égal à 0,10 %, voire supérieur ou égal à 0,12 %, voire supérieur ou égal à 0,15 %, et inférieur ou égal à 0,30 %.

Suivant un troisième mode de réalisation particulier, l'invention propose un produit réfractaire fondu et coulé comportant, en pourcentages massiques sur la base des oxydes et pour un total de 100% :
- ZrO₂ + HfO₂ : complément à 100 %.
- SiO₂: 3,5 % à 6,0 %
- Al₂O₃ : 1,1 % à 1,5 %
- Na₂O + K₂O: 0,10 % à 0,43 %
- B₂O₃ : 0,05 % à 0,40 %
- CaO + SrO + MgO +ZnO : < 0,4 %
- P₂O₅ : < 0,05 %
- Fe₂O₃ + TiO₂:< 0,55 %
- autres espèces : < 1,5 %,
le rapport (A/N) des pourcentages massiques Al₂O₃ / (Na₂O+K₂O) étant supérieur à 3,5, de préférence supérieur à 4, voire supérieur à 5, voire supérieur à 6, et inférieur à 15, inférieur à 12, inférieur à 10, inférieur à 8, voire inférieur à 7,5, et
le rapport (B/N) des pourcentages massiques B₂O₃ / (Na₂O+K₂O) étant supérieur à 0,3, de préférence supérieur à 0,35, de préférence supérieur à 0,4, de préférence supérieur à 0,5, voire supérieur à 0,8, voire supérieur à 1,0 et inférieur à 2,5, inférieur à 2,2, inférieur à 2,0, voire inférieur à 1,5.

Dans des variantes particulières, (Na₂O + K₂O) ≥ 0,15 %, et de préférence (Na₂O + K₂O) ≤ 0,40 %, voire (Na₂O + K₂O) ≤ 0,30 %.

Suivant un quatrième mode de réalisation particulier, l'invention propose un produit réfractaire fondu et coulé comportant, en pourcentages massiques sur la base des oxydes et pour un total de 100% :
- ZrO₂ + HfO₂: complément à 100 %.
- SiO₂ : 3,5 % à 6,0 %
- Al₂O₃ : 1,1 % à 1, 5 %
- Na₂O+K₂O: 0,10 % à 0,40 %
- B₂O₃ : 0,10 % à 0,40 %
- CaO + SrO + MgO + ZnO : < 0,4 %
- P₂O₅ : < 0,05 %
- Fe₂O₃ + TiO₂ : < 0,55 %
- autres espèces : < 1,5 %,
le rapport des pourcentages massiques B₂O₃ / (Na₂O+K₂O) étant compris entre 0,3 et 2,5, de préférence entre 0,4 et 2,2.

En variante, (Na₂O + K₂O) ≥ 0,15 % et/ou (Na₂O + K₂O) ≤ 0,30 %.

En variante, B₂O₃ ≥ 0,15 % et/ou B₂O₃ ≤ 0,30 %.

Il est aussi décrit un produit réfractaire fondu et coulé comportant, en pourcentages massiques sur la base des oxydes et pour un total de 100% :
- ZrO₂ + HfO₂ : complément à 100 %
- SiO₂ : 3,5 % à 6,0 %
- Al₂O₃ : 1,1 % à 1,5 %
- Na₂O + K₂O: 0,10 % à 0,43 %
- B₂O₃ : 0,05 % à 0,80 %
- CaO + SrO + MgO + ZnO : < 0,4 %
- P₂O₅ : < 0,05 %
- Fe₂O₃ + TiO₂ : < 0,55 %
- autres espèces : < 1,5 %,
le rapport (B/N) des pourcentages massiques B₂O₃ / (Na₂O+K₂O) étant compris entre 0,3 et 2,5, de préférence entre 0,4 et 2,2.

Dans un mode de réalisation particulier, (Na₂O + K₂O) ≤ 0,40 %.

Les caractéristiques d'un produit selon le premier mode de réalisation principal de l'invention, nécessaires ou optionnelles, peuvent être également appliquées à un produit selon le deuxième mode de réalisation principal, pourvu qu'elles ne soient pas incompatibles avec ce dernier.

Il est enfin décrit un procédé de fabrication d'un produit réfractaire selon l'invention, comprenant les étapes successives suivantes :
a) mélange de matières premières de manière à former une charge de départ,
b) fusion de ladite charge de départ jusqu'à obtention d'une matière en fusion,
c) coulage et solidification de ladite matière en fusion, par refroidissement, de manière à obtenir un produit réfractaire,
ce procédé étant remarquable en ce que lesdites matières premières sont choisies de manière que ledit produit réfractaire soit conforme à l'invention.

De préférence, on ajoute systématiquement et méthodiquement les oxydes pour lesquels une teneur minimale est nécessaire, notamment Na₂O, Al₂O₃ et B₂O₃, ou des précurseurs de ces oxydes. De préférence, on tient compte des teneurs de ces oxydes dans les sources des autres oxydes où ils sont classiquement considérés comme des impuretés.

De préférence, le refroidissement est contrôlé, de préférence de manière à être effectué à une vitesse inférieure à 20°C par heure, de préférence à la vitesse d'environ 10°C par heure.

L'invention concerne aussi un four de fusion de verre comportant un produit réfractaire selon l'invention, ou un produit réfractaire fabriqué ou susceptible d'être fabriqué suivant un procédé selon l'invention, en particulier dans les régions destinées à être en contact avec le verre en fusion. Dans un four selon l'invention, le produit réfractaire peut avantageusement faire partie d'une cuve de préparation de verre par fusion, notamment par fusion électrique, où il est susceptible d'entrer en contact avec du verre en fusion à une température supérieure à 1200°C.

### Définitions

Les pourcentages massiques en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, vanadium et chrome sont des impuretés.

Sauf mention contraire, toutes les quantités d'oxydes dans les produits décrits et revendiqués sont des pourcentages massiques sur la base des oxydes.

### Description détaillée de l'invention

Dans les produits fondus et coulés selon l'invention, la forte teneur en zircone ZrO₂ permet de répondre aux exigences de haute résistance à la corrosion sans coloration du verre produit ni génération de défauts nuisibles à la qualité de ce verre.

L'oxyde d'hafnium, HfO₂, présent dans le produit selon l'invention est l'oxyde d'hafnium naturellement présent dans les sources de zircone. Sa teneur dans un produit selon l'invention est donc inférieure ou égale à 5 %, généralement inférieure ou égale à 2 %.

La présence de silice SiO₂ permet notamment la formation d'une phase vitreuse intergranulaire apte à accommoder de manière efficace les variations de volume de la zircone lors de sa transformation allotropique réversible, c'est-à-dire lors du passage de la phase monoclinique à la phase tétragonale. Le pourcentage massique en silice doit être supérieur à 3,5 %. En revanche, l'ajout de silice ne doit pas dépasser 6,0 % car cet ajout se fait au détriment de la teneur en zircone et peut donc nuire à la résistance à la corrosion.

La présence d'alumine Al₂O₃ est notamment nécessaire à la formation d'une phase vitreuse stable et à la bonne coulabilité de la charge de départ dans le moule. Elle contribue également à l'obtention d'une très bonne résistance aux variations thermiques. Toutefois, l'ajout d'alumine ne doit pas dépasser 1,5 % car un pourcentage massique plus élevé peut entraîner une instabilité de la phase vitreuse (formation de cristaux de mullite), en particulier en présence d'oxyde de bore.

La présence d'un pourcentage massique de Na₂O+K₂O supérieur à 0,10 % contribue à l'obtention d'une très bonne résistance aux variations thermiques. Il est préférable que le pourcentage massique de Na₂O ne dépasse pas 0,30 % afin d'obtenir une bonne capacité de fluage. Dans un produit selon l'invention, on considère que les oxydes Na₂O et K₂O ont des effets similaires.

La présence d'un pourcentage massique de B₂O₃ supérieur à 0,05 % permet notamment d'augmenter très significativement la capacité de fluage. Toutefois, la quantité de B₂O₃ doit rester telle que le rapport B₂O₃ / (Na₂O+K₂O) soit inférieur ou égal à 2,5, de préférence inférieur ou égal à 2,2. L'oxyde de bore a en effet un effet défavorable car il facilite la formation de zircon dans le produit. Au-delà de 0,30 %, la résistance aux variations thermiques diminue. Elle reste cependant acceptable jusqu'à un pourcentage massique B₂O₃ de 0,80 %.

Selon l'invention, le pourcentage massique de Fe₂O₃ + TiO₂ est inférieur à 0,55 % et celui de P₂O₅ est inférieur à 0,05 %. En effet, ces oxydes sont connus pour être néfastes et leur teneur doit être limitée à des traces introduites à titre d'impuretés avec les matières premières.

Les « autres espèces » sont les espèces qui ne sont pas listées ci-dessus, à savoir les espèces autres que ZrO₂, HfO₂, SiO₂, Al₂O₃, Na₂O, K₂O, B₂O₃, CaO, SrO, MgO, ZnO, P₂O₅, Fe₂O₃ et TiO₂. Dans un mode de réalisation, les « autres espèces » sont limitées à des espèces dont la présence n'est pas particulièrement souhaitée et qui sont généralement présentes à titre d'impuretés dans les matières premières.

Dans un autre mode de réalisation, les « autres espèces » peuvent également comprendre des espèces dont la présence est avantageuse. Ainsi, dans un mode de réalisation, le produit comporte avantageusement au moins 0,05% d'oxyde de baryum BaO. Cet oxyde peut être une impureté ou être ajouté volontairement dans la charge de départ, si nécessaire. De préférence sa teneur est inférieure à 0,5%, en pourcentage massique sur la base des oxydes.

Un produit selon l'invention peut être classiquement fabriqué suivant les étapes a) à c) décrites ci-dessous :
a) mélange de matières premières de manière à former une charge de départ,
b) fusion de ladite charge de départ jusqu'à obtention d'une matière en fusion,
c) solidification de ladite matière en fusion, par refroidissement, de manière à obtenir un produit réfractaire selon l'invention.

A l'étape a), les matières premières sont choisies de manière à garantir les teneurs en oxydes dans le produit fini.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes ou des nitrates.

A l'étape c), le refroidissement est de préférence effectué à une vitesse inférieure à 20°C par heure, de préférence à la vitesse d'environ 10°C par heure.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle d'un produit selon l'invention.

### Exemples

Les exemples non limitatifs suivants sont donnés dans le but d'illustrer l'invention.

Dans ces exemples, on a employé les matières premières suivantes :
- de la zircone contenant principalement, en moyenne massique, 98,5 % de ZrO₂+ HfO₂, 0,2 % de SiO₂ et 0,02 % de Na₂O,
- du sable de zircon à 33 % de silice,
- de l'alumine de type AC44 vendue par la société Pechiney et contenant en moyenne 99,4 % d'alumine Al₂O₃,
- des oxydes de bore et de sodium de pureté supérieure à 99 %.

Les produits ont été préparés selon le procédé classique de fusion en four à arc puis coulés pour obtenir des blocs de format 220 mm x 450 mm x 150 mm.

L'analyse chimique des produits obtenus est donnée dans le tableau 1 ; il s'agit d'une analyse chimique moyenne, donnée en pourcentages massiques.

Dans un test de fluage, dit « anisotherme », on utilise une configuration d'essai de flexion à quatre points d'appui (distance entre appuis extérieurs

L = 125 mm, distance entre appuis intérieurs I = 40 mm). Une barrette de dimensions 25 mm x 15 mm x 150 mm est posée sur ces points d'appui, puis soumise en son milieu à une contrainte de 1 MPa, la température étant augmentée de la température ambiante à 1500°C à la vitesse de 30°C/heure. On enregistre la variation de la flèche de la barrette (en mm) tout au long de l'essai. On mesure en particulier la flèche à la température de transformation allotropique de la zircone et à 1400°C, et on en déduit les valeurs DTz, égale au pourcentage d'augmentation de la flèche après la transformation allotropique de la zircone par rapport à la flèche avant la transformation allotropique de la zircone, et D1400, égale au pourcentage d'augmentation de la flèche à 1400°C par rapport à la flèche à température ambiante.

L'aptitude à résister aux variations thermiques est déterminée à l'aide d'un test consistant à faire subir à un échantillon de dimensions 30 mm x 30 mm x 30 mm 25 cycles entre 800°C et 1250°C. A chaque cycle, l'échantillon est maintenu 1 heure à 800°C, puis la température est portée à 1250°C en 1 heure et est maintenue à cette valeur pendant 1 heure. La valeur Vv indiquée correspond à l'augmentation de volume, donnée en pourcentage, entre le début et la fin de l'essai.

Dans le tableau 1 suivant, * indique que l'exemple est en dehors de l'invention, ND signifie « Non Déterminé ».

L'exemple 1 correspond au produit ER1195 qui constitue la référence.

**Tableau 1**

| | SiO₂ | Na₂O | Al₂O₃ | B₂O₃ | A/N | B/N | DTz (%) | D1400 (%) | Vv(%) |
|---|---|---|---|---|---|---|---|---|---|
| 1* | 4,00 | 0,28 | 1,20 | 0,00 | 4,29 | 0,00 | 0,26 | 0,72 | 3,2 |
| 2* | 3,52 | 0,11 | 0,48 | 0,25 | 4,36 | 2,27 | 1,01 | 1,69 | 17 |
| 3* | 4,52 | 0,11 | 0,95 | 0,28 | 8,64 | 2,55 | ND | ND | 15 |
| 4* | 4,50 | <0,05 | 1,15 | 0,25 | | | ND | ND | 25,8 |
| 5* | 4,50 | 0,47 | 1,42 | 0,17 | 3,02 | 0,36 | 0,35 | ND | ND |
| 6 | 4,32 | 0,17 | 1,23 | 0,19 | 7,24 | 1,12 | 0,67 | 0,98 | 7 |
| 7 | 4,21 | 0,13 | 1,24 | 0,28 | 9,54 | 2,15 | 1,2 | 1,6 | 6 |
| 8 | 3,99 | 0,19 | 1,18 | 0,25 | 6,21 | 1,32 | 0,9 | ND | 6 |
| 9 | 4,10 | 0,30 | 1,10 | 0,13 | 3,67 | 0,43 | 1,28 | 1,53 | 4 |
| 10* | 4,50 | 0,13 | 1,15 | 0,40 | 8,85 | 3,08 | ND | ND | 35 |
| 11* | 4,18 | 0,12 | 1,02 | 0,40 | 8,50 | 3,33 | 1,07 | 1,54 | 23 |
| 12* | 4,30 | 0,07 | 0,65 | 0,17 | 9,29 | 2,43 | ND | ND | 16 |
| 13 | 5,24 | 0,10 | 1,04 | 0,24 | 10,4 | 2,40 | ND | ND | 6,3 |

Les résultats montrent que les produits de l'invention testés présentent un excellent comportement. En particulier, le fluage est supérieur à 0,5 % à la température de transformation allotropique de la zircone et la valeur Vv reste inférieure à 10 %. On observe que la capacité de fluage des produits selon l'invention est au moins deux fois supérieure à celle du produit de référence (exemple 1).

Le tableau 1 illustre bien que la plage des compositions des produits selon l'invention est particulièrement étroite. On observe en particulier la grande sensibilité des résultats à une évolution des teneurs en oxydes de métaux alcalins, en oxyde de bore et en alumine.

Une comparaison des exemples 6 à 9 et 13 avec l'exemple 4 montre l'importance de la présence d'une quantité minimale en oxydes de métaux alcalins, en l'occurrence en oxyde de sodium, pour maintenir une bonne résistance aux variations thermiques.

Une comparaison des exemples 6 à 9 et 13 avec l'exemple 1 montre l'importance de la présence d'une quantité minimale d'oxyde de bore pour obtenir une bonne capacité au fluage. Une comparaison des exemples 6 à 9 et 13 avec les exemples 3, 10 et 11 montre cependant que cette quantité doit être limitée afin d'avoir un rapport (B/N) des pourcentages massiques B₂O₃ / (Na₂O+K₂O) inférieur à 2,5 et éviter une détérioration de la résistance aux variations thermiques.

Une comparaison des exemples 6 à 9 et 13 avec les exemples 2 et 12 montre l'importance de la présence d'une quantité minimale d'alumine pour éviter une détérioration de la résistance aux variations thermiques.

Par ailleurs, d'autres essais ont permis de vérifier que les produits selon l'invention présentent également les autres propriétés reconnues pour les matériaux à forte teneur en zircone, en particulier la résistance à la corrosion par le verre.

Bien entendu, la présente invention n'est pas limitée aux modes de réalisation décrits et représentés fournis à titre d'exemples illustratifs et non limitatifs.

## Revendications

1. Produit réfractaire fondu et coulé comportant, en pourcentages massiques sur la base des oxydes et pour un total de 100 % :
- ZrO₂+ HfO₂: complément à 100 %
- SiO₂: 3,5 % à 6,0 %
- Al₂O₃: 0,7 % à 1,5 %
- Na₂O + K₂O: 0,10 % à 0,43 %
- B₂O₃: 0,05 % à 0,40 %
- CaO + SrO + MgO + ZnO: < 0,4 %
- P₂O₅: < 0,05 %
- Fe₂O₃ + TiO₂: < 0,55 %
- autres espèces : < 1,5 %,
le rapport des pourcentages massiques Al₂O₃ / (Na₂O+K₂O) étant supérieur ou égal à 3,5 et
le rapport des pourcentages massiques B₂O₃ / (Na₂O+K₂O) étant compris entre 0,3 et 2,5.

2. Produit réfractaire fondu et coulé selon la revendication précédente, dans lequel Al₂O₃ ≥ 1,1 %.

3. Produit réfractaire fondu et coulé selon l'une quelconque des revendications précédentes, le rapport des pourcentages massiques B₂O₃ / (Na₂O+K₂O) étant supérieur à 0,5.

4. Produit réfractaire fondu et coulé selon l'une quelconque des revendications précédentes, le rapport des pourcentages massiques B₂O₃/ (Na₂O+K₂O) étant supérieur à 0,8.

5. Produit réfractaire fondu et coulé selon l'une quelconque des revendications précédentes, le rapport des pourcentages massiques B₂O₃ (Na₂O+K₂O) étant supérieur à 1,0.

6. Produit réfractaire fondu et coulé selon l'une quelconque des revendications précédentes, le rapport des pourcentages massiques B₂O₃ / (Na₂O+K₂O) étant inférieur à 2,2.

7. Produit réfractaire fondu et coulé selon la revendication précédente, le rapport des pourcentages massiques B₂O₃ / (Na₂O+K₂O) étant inférieur à 1,5.

8. Produit réfractaire fondu et coulé selon l'une quelconque des revendications précédentes, dans lequel (Na₂O+K₂O) ≤ 0,40 % et/ou B₂O₃ ≤ 0,60 %.

9. Produit réfractaire fondu et coulé selon l'une quelconque des revendications précédentes, dans lequel (Na₂O+K₂O) s 0,30 % et/ou B₂O₃ ≤ 0,30 %.

10. Produit réfractaire fondu et coulé selon l'une quelconque des revendications précédentes, dans lequel (Na₂O+K₂O) ≥ 0,15 % et/ou B₂O₃ ≥ 0,15 %.

11. Produit réfractaire fondu et coulé selon l'une quelconque des revendications précédentes, dans lequel le rapport des pourcentages massiques Al₂O₃ / (Na₂O+K₂O) est supérieur à 6.

12. Produit réfractaire fondu et coulé selon l'une quelconque des revendications précédentes, dans lequel le pourcentage massique total des « autres espèces » est inférieur à 0,5 %.

13. Four de fusion de verre comportant un produit réfractaire selon l'une quelconque des revendications précédentes.

14. Four selon la revendication précédente, ledit produit réfractaire étant disposé dans une région destinée à être en contact avec du verre en fusion à une température supérieure à 1200°C.

15. Utilisation d'un produit réfractaire fondu et coulé selon l'une quelconque des revendications 1 à 12 pour augmenter la résistance au fluage d'un four selon l'une quelconque des deux revendications immédiatement précédentes.

## Patentansprüche

1. Geschmolzenes und gegossenes Feuerfestprodukt, welches in Massenprozenten auf der Basis von Oxyden und für eine Gesamtheit von 100% enthält:
- ZrO₂ + HfO₂: Ergänzend zu 100%
- SiO₂: 3,5% bis 6,0%
- Al₂O₃: 0,7% bis 1,5%
- Na₂O + K₂O: 0,10% bis 0,43%
- B₂O₃: 0,05% bis 0,40%
- CaO + SrO + MgO + ZnO: < 0,4%
- P₂O₅: < 0,05%
- Fe₂O₃ + TiO₂: < 0,55%
- andere Spezies: < 1,5%,
wobei das Massenprozentverhältnis Al₂O₃ / (Na₂O + K₂O) größer oder gleich 3,5 ist und das Verhältnis der Massenprozente B₂O₃ / (Na₂O + K₂O) zwischen 0,3 und 2,5 liegt.

2. Geschmolzenes und gegossenes Feuerfestprodukt nach dem vorhergehenden Anspruch, in welchem Al₂O₃ ≥ 1,1 % ist.

3. Geschmolzenes und gegossenes Feuerfestprodukt nach einem der vorhergehenden Ansprüche, wobei das Verhältnis der Massenprozente B₂O₃ / (Na₂O + K₂O) größer als 0,5 ist.

4. Geschmolzenes und gegossenes Feuerfestprodukt nach einem der vorhergehenden Ansprüche, wobei das Verhältnis der Massenprozente B₂O₃ / (Na₂O + K₂O) größer als 0,8 ist.

5. Geschmolzenes und gegossenes Feuerfestprodukt nach einem der vorhergehenden Ansprüche, wobei das Verhältnis der Massenprozente B₂O₃ / (Na₂O + K₂O) größer als 1,0 ist.

6. Geschmolzenes und gegossenes Feuerfestprodukt nach einem der vorhergehenden Ansprüche, wobei das Verhältnis der Massenprozente B₂O₃ / (Na₂O + K₂O) kleiner als 2,2 ist.

7. Geschmolzenes und gegossenes Feuerfestprodukt nach dem vorhergehenden Anspruch, wobei das Verhältnis der Massenprozente B₂O₃ / (Na₂O + K₂O) kleiner als 1,5 ist.

8. Geschmolzenes und gegossenes Feuerfestprodukt nach einem der vorhergehenden Ansprüche, in welchem (Na₂O + K₂O) ≤ 0,40 % und/oder B₂O₃ ≤ 0,60% ist.

9. Geschmolzenes und gegossenes Feuerfestprodukt nach einem der vorhergehenden Ansprüche, in welchem (Na₂O + K₂O) ≤ 0,30 % und/oder B₂O₃ ≤ 0,30% ist.

10. Geschmolzenes und gegossenes Feuerfestprodukt nach einem der vorhergehenden Ansprüche, in welchem (Na₂O + K₂O) ≥ 0,15% und/oder B₂O₃ ≥ 0,15% ist.

11. Geschmolzenes und gegossenes Feuerfestprodukt nach einem der vorhergehenden Ansprüche, in welchem das Verhältnis der Massenprozente Al₂O₃ / (Na₂O + K₂O) größer als 6 ist.

12. Geschmolzenes und gegossenes Feuerfestprodukt nach einem der vorhergehenden Ansprüche, in welchem der gesamte Massenprozentsatz der "anderen Spezies" kleiner als 0,5% ist.

13. Glasschmelzofen, welcher ein Feuerfestprodukt nach einem der vorhergehenden Ansprüche aufweist.

14. Ofen nach dem vorhergehenden Anspruch, wobei das Feuerfestprodukt in einem Bereich angeordnet ist, welcher bestimmt ist in Kontakt mit dem geschmolzenen Glas bei einer Temperatur ist, die größer als 1200°C beträgt, zu sein.

15. Verwendung eines geschmolzenen und gegossenen Feuerfestprodukts nach einem der Ansprüche 1 bis 12, um den Fließwiderstand eines Ofens nach einem der unmittelbar vorhergehenden beiden Ansprüche zu vergrößern.

## Claims

1. Fused and cast refractory product comprising, in percent by weight on the basis of the oxides and for a total of 100 % :
- ZrO₂ + HfO₂ : complement to 100 %
- SiO₂: 3.5 % to 6.0 %
- Al₂O₃ : 0.7 % to 1.5 %
- Na₂O + K₂O : 0.10 % to 0.43 %
- B₂O₃ : 0.05 % to 0.40%
- CaO + SrO + MgO + ZnO: < 0.4 %
- P₂O₅ : < 0.05 %
- Fe₂O₃ + TiO₂ : < 0.55 %
- other species : < 1.5 %,
the ratio of percentages by weight of Al₂O₃ / (Na₂O+K₂O) being greater than or equal to 3.5 and the ratio of percentages by weight of B₂O₃ / (Na₂O+K₂O) being between 0.3 and 2.5.

2. Fused and cast refractory product according to the previous claim, in which Al₂O₃ ≥ 1.1 %.

3. Fused and cast refractory product according to any one of the previous claims, the ratio of percentages by weight of B₂O₃ / (Na₂O+K₂O) being greater than 0.5.

4. Fused and cast refractory product according to any one of the previous claims, the ratio of percentages by weight of B₂O₃ / (Na₂O+K₂O) being greater than 0.8.

5. Fused and cast refractory product according to any one of the previous claims, the ratio of percentages by weight of B₂O₃ / (Na₂O+K₂O) being greater than 1.0.

6. Fused and cast refractory product according to any one of the previous claims, the ratio of percentages by weight of B₂O₃ / (Na₂O+K₂O) being less than 2.2.

7. Fused and cast refractory product according to the previous claim, the ratio of percentages by weight of B₂O₃ / (Na₂O+K₂O) being less than 1.5.

8. Fused and cast refractory product according to any one of the previous claims, wherein (Na₂O+K₂O) ≤ 0.40 % and/or B₂O₃ ≤ 0.60 %.

9. Fused and cast refractory product according to any one of the previous claims, wherein (Na₂O+K₂O) ≤ 0.30 % and/or B₂O₃ ≤ 0.30 %.

10. Fused and cast refractory product according to any one of the previous claims, wherein (Na₂O+K₂O) ≥ 0.15 % and/or B₂O₃ ≥ 0.15 %.

11. Fused and cast refractory product according to any one of the previous claims, wherein the ratio of percentages by weight of Al₂O₃ / (Na₂O+K₂O) is greater than 6.

12. Fused and cast refractory product according to any one of the previous claims, wherein the total percentage by weight of the "other species" is less than 0.5 %.

13. Glass fusion furnace comprising a refractory product according to any one of the previous claims.

14. Furnace according to the previous claim, said refractory product being placed in a region intended to be in contact with molten glass at a temperature greater than 1200°C.

15. Use of a fused and cast refractory product according to any one of the claims 1 to 12 in order to increase the creep resistance of a furnace according to either of the two immediately preceding claims.
